# EUROPÄISCHE PATENTSCHRIFT

(11) **EP 2 615 449 B1**
(45) Veröffentlichungstag und Bekanntmachung des Hinweises auf die Patenterteilung: **18.04.2018**
(21) Anmeldenummer: 13150577.8
(22) Anmeldetag: 09.01.2013
(51) Int. Cl.: G01N 27/28, G01D 11/30

(54) **WECHSELARMATUR FÜR EIN BEHÄLTNIS UND VERWENDUNG EINER WECHSELARMATUR**
INTERCHANGEABLE FITTING FOR A CONTAINER AND USE OF AN INTERCHANGEABLE FITTING
ARMATURE INTERCHANGEABLE POUR UN RÉCIPIENT ET UTILISATION D'UNE ARMATURE INTERCHANGEABLE

(30) Priorität: 12.01.2012 DE 102012200438
(43) Veröffentlichungstag der Anmeldung: 17.07.2013
(73) Patentinhaber: Evonik Degussa GmbH, 45128 Essen (DE)
(72) Erfinder: Duve, Johannes, 48249 Dülmen (DE); Kossmann, Beate, 58095 Hagen (DE); Rahtz, Hartmut, 48249 Dülmen (DE); Exner, Detlef, 71297 Mönsheim (DE); Tottewitz, Michael, 76689 Karlsdorf-Neuthard (DE)

(56) Entgegenhaltungen:
- EP-A2- 1 148 317
- EP-A2- 1 832 871
- DE-A1- 19 721 965
- DE-A1-102008 042 424
- DE-A1-102008 055 016
- DE-A1-102010 029 029
- DE-U1-202007 006 784
- US-A- 3 829 761
- H J Postberg ET AL: "Sensorwechselarmatur WA 3 HDUS/ EU 225", Bedienungsanleitung, BA 070208, 1. März 2007 (2007-03-01), Seiten 1-43, XP055136571, Schulstraße 30, D-94239 Gotteszell Gefunden im Internet: URL:http://www.bartec.de/homepage/deu/down loads/produkte/16_messtechnik/Sensorwechse larmatur_BA_070208.pdf [gefunden am 2014-08-26]

## Beschreibung

Die Erfindung betrifft eine Wechselarmatur für ein Behältnis gemäß Oberbegriff des Anspruchs 1 und weiterhin eine Verwendung einer Wechselarmatur.

Ein Behältnis im Sinne der Erfindung umschließt ein stehendes oder fließendes Medium zumindest teilweise. Als Behältnis kommt so etwa eine geschlossene Rohrleitung, ein offenes Gerinne, ein geschlossener Tank oder ein offenes Becken in Betracht.

Das von dem Behältnis umschlossene Medium kann eine Flüssigkeit, ein Gas, und gegebenenfalls auch ein fließfähiger Feststoff (Pulver) oder eine Mischung daraus sein.

Wechselarmaturen sind bekannt, um Messungen an einem Medium in einem Behältnis vorzunehmen. Hierzu umfasst die Wechselarmatur eine Lanze und ein Befestigungselement mit einem Führungselement für die Lanze.

In einer Benutzungsstellung wird das Befestigungselement typischerweise über einen Flansch mit dem Behältnis verbunden und das Führungselement ist derart an dem Befestigungselement angeordnet, dass es in Benutzungsstellung in das Behältnis hineinragt.

Das Führungselement ist zur Aufnahme der Lanze ausgebildet, wobei die Lanze in dem Führungselement und relativ zu diesem verschiebbar ist.

In einer Arbeitsposition steht bei den vorbekannten Wechselarmaturen typischerweise ein endständiger Bereich der Lanze über das Führungselement vor, so dass ein in diesem endständiger Bereich angeordneter Arbeitsbereich der Lanze, welcher beispielsweise Messsensoren aufweist, mit dem Medium in dem Behältnis in Kontakt steht. In einer Ruheposition ist der Arbeitsbereich der Lanze eingezogen und liegt innerhalb des Führungselementes und ist gegenüber dem Medium in dem Behältnis abgedichtet.

Mit den vorbekannten Wechselarmaturen ist es somit möglich, wahlweise einen Arbeitsbereich der Lanze aus einer Ruheposition in eine Arbeitsposition und zurückzuverschieben.

Aus DE 20 2007 006 784 U1 ist eine Wechselarmatur bekannt, bei welcher in der Ruheposition über Spülleitungen ein Spülen des Arbeitsbereiches und somit insbesondere von im Arbeitsbereich angeordneten Messsensoren möglich ist. Vergleichbare Vorrichtungen werden in DE 19721965 A1, US 3829761 A, EP 1148317 A2 sowie durch H. J. Postberg et al. in "Sensorwechselarmatur WA 3 HD-US/EU 225", Betriebsanleitung/BA 070208, 01.03.2007, Seiten 1-43, XP055136571 der BARTEC GmbH, Schulstraße 30, D-94239 Gotteszell offenbart.

Hiervon ausgehend liegt der Erfindung die Aufgabe zugrunde, die Einsetzmöglichkeiten der vorbekannten Wechselarmaturen zu erweitern und/oder deren Handhabung bei Benutzung zu verbessern.

Gelöst ist diese Aufgabe durch eine Wechselarmatur für ein Behältnis gemäß Anspruch 1, sowie durch eine Verwendung einer Wechselarmatur gemäß Anspruch 4. Vorteilhafte Ausgestaltungen der Wechselarmatur finden sich in den Ansprüchen 2 bis 3. Hiermit wird der Wortlaut sämtlicher Ansprüche explizit per Referenz in die Beschreibung einbezogen.

Die erfindungsgemäße Wechselarmatur für ein Behältnis umfasst eine Lanze und ein Befestigungselement mit einem Führungselement für die Lanze.

In einer Benutzungsstellung ist das Befestigungselement zumindest mittelbar an dem Behältnis angeordnet und das Führungselement ragt in das Behältnis hinein.

Das Führungselement ist zur Aufnahme der Lanze ausgebildet, wobei die Lanze in dem Führungselement und relativ zu diesem verschiebbar ist, zwischen einer Arbeitsposition, bei welcher ein Arbeitsbereich der Lanze mit dem Fluid in dem Behältnis in Kontakt steht und eine Ruheposition, bei welcher der Arbeitsbereich innerhalb des Führungselementes liegt und gegenüber dem Fluid in dem Behältnis abgedichtet ist.

In Benutzungsstellung kann somit wahlweise durch Verschieben der Lanze relativ zu dem Führungselement der Arbeitsbereich der Lanze in Kontakt mit dem Fluid gebracht werden. Ebenso ist es möglich, wahlweise durch Verschieben der Lanze den Arbeitsbereich in die Ruheposition zu bewegen, so dass der Arbeitsbereich durch das Führungselement gegenüber dem Fluid in dem Behältnis abgedichtet ist.

Wesentlich ist, dass das Führungselement verschiebbar an dem Befestigungselement angeordnet ist, so dass bei zumindest mittelbar an dem Behältnis angeordnetem Befestigungselement das Führungselement wahlweise in der Benutzungsstellung anordbar oder aus dem Behältnis entfernbar ist.

Im Unterschied zu vorbekannten Wechselarmaturen weist die erfindungsgemäße Wechselarmatur somit ein relativ zu dem Befestigungselement verschiebbares Führungselement auf.

Dies ist in der Erkenntnis der Erfinder begründet, dass bei vorbekannten Wechselarmaturen die einstückige Ausbildung von Befestigungselement und Führungselement in mehrfacher Hinsicht nachteilig ist:

Bei vorbekannten Wechselarmaturen ist eine Wartung, welche den in das Behältnis hineinragenden Bereich des Führungselementes umfasst nur durch vollständiges Entfernen der Wechselarmatur möglich. Hierbei muss somit das Befestigungselement mit dem Führungselement von dem Behältnis entfernt werden. Dies führt zwingend zu einem Fluidaustritt aus dem Behältnis, so dass für diesen Vorgang in typischen Fällen das Behältnis geleert oder zumindest druckfrei gegenüber der Umgebung gestellt werden muss. Insbesondere in industriellen Prozessierungsanlagen bedeutet dies, dass der Prozess zur Durchführung solch einer Wartung gestoppt werden muss.

Bei der erfindungsgemäßen Wechselarmatur hingegen ist es möglich, das Führungselement relativ zu dem Befestigungselement aus der vorgenannten Benutzungsstellung in eine Wartungsstellung zu verschieben, in welcher Wartungsstellung das Führungselement nicht in das Behältnis hineinragt. Ebenso ist es möglich, das Führungselement mit dem Befestigungselement vollständig von dem Behältnis zu lösen, so dass selbst bei einem Lösen des Führungselementes und des Befestigungselementes von dem Behältnis kein oder nur eine vernachlässigbar geringe Menge Fluid austritt. Dies setzt allerdings vorraus, dass das Befestigungselement mittelbar über ein verriegelbares Verriegelungselement an dem Behältnis fluiddicht festgesetzt ist.

Mit der erfindungsgemäßen Wechselarmatur ist es somit erstmals möglich, ohne Unterbrechen eines Produktionsprozesses das Führungselement und das Befestigungselement zu Wartungszwecken in vorbeschriebene Wartungsstellung zu verschieben oder vollständig abzulösen und gegebenenfalls zu ersetzen.

Eine Wartung wie vorbeschrieben kann aus vielerlei Gründen notwendig sein. So ist es möglich, dass aufgrund von Verschleiß insbesondere von Dichtmitteln an dem Führungselement, insbesondere zwischen Führungselement und Lanze, eine Wartung oder ein Austausch der Dichtmittel erfolgen muss. Ebenso ist es möglich, dass sich Partikel zwischen Lanze und Führungselement anlagern, so dass die Verschiebbarkeit zwischen Lanze und Führungselement nicht mehr gewährleistet ist und somit eine Reinigung oder ein Austausch erfolgen muss.

Darüber hinaus ermöglicht es die erfindungsgemäße Wechselarmatur erstmals, während eines laufenden Prozesses an ein Behältnis, welches keinerlei Anschlusselemente aufweist, die erfindungsgemäße Wechselarmatur anzubringen.

Weiterhin ist bei der erfindungsgemäßen Wechselarmatur die notwendige Verschiebestrecke, das heißt der vorzunehmende Hub, der jeweils vorliegenden Anforderung angepasst:

Um den Arbeitsbereich der Lanze zwischen der Arbeitsposition und der Ruheposition zu verschieben, ist lediglich ein geringer Arbeitshub notwendig, welcher typischerweise in etwa der Ausdehnung des Arbeitsbereiches in Verschieberichtung entspricht.
Muss hingegen eine Wartung umfassend das Führungselement vorgenommen werden, so wird das Führungselement entnommen, wodurch ein Wartungshub notwendig ist, welcher zumindest der Strecke entspricht, um welche das Führungselement in Verschieberichtung in das Behältnis hineinragt.
Der Arbeitshub ist somit typischerweise erheblich kleiner als der Wartungshub. Darüber hinaus ist typischerweise ein Wechsel zwischen Arbeitsposition und Ruheposition die typische Anwendung der Wechselarmatur, wohingegen ein Wechsel zwischen Benutzungsstellung und Wartungsstellung nur in Ausnahmefällen oder längerfristigen Wartungsintervallen erfolgen muss. Der erforderliche vorzunehmende Hub wird somit durch die erfindungsgemäße Wechselarmatur minimiert. Dies ist insbesondere bei Verwendung der Wechselarmatur für ein Behältnis vorteilhaft, indem ein erheblicher Überdruck gegenüber der Umgebung besteht. In einem Beispiel, das nicht unter den Schutzumfang der Ansprüche fällt, weist die Wechselarmatur eine mechanische Verschiebeeinheit zum Verschieben der Lanze relativ zu dem Führungselement auf, wobei typischerweise die Lanze linear zur Lanzenführung verschoben wird und somit die mechanische Verschiebeeinheit vorzugsweise entsprechend ausgebildet ist. Hierdurch wird das Verschieben der Lanze durch Verwendung der mechanischen Verschiebeeinheit erleichtert. Es liegt im Rahmen der Erfindung, die mechanische Verschiebeeinheit manuell bedienbar und/oder elektromotorisch und/oder pneumatisch angetrieben auszubilden. In allen Fällen ist es vorteilhaft, wenn die mechanische Verschiebeeinheit selbsthemmend ist, so dass ein unkontrolliertes Verschieben der Lanze relativ zur Lanzenführung, insbesondere bedingt durch einen hohen Überdruck in dem Behältnis, vermieden wird. In einem anderen Beispiel, das nicht unter den Schutzumfang der Ansprüche fällt, ist es zur Erhöhung der Sicherheit und des Bedienungskomforts vorteilhaft, dass die Verschiebeeinheit eine Verriegelung zum Verriegeln der Lanze in der Arbeitsposition und/oder der Ruheposition aufweist. Hierdurch wird ein versehentliches oder selbsttätiges Verschieben der Lanze vermieden. Insbesondere ist es vorteilhaft, eine manuell lösbare Verriegelung vorzusehen. Ein weiterer Vorteil ergibt sich, indem die Verriegelung eine Verriegelungsanzeige aufweist.

Hierdurch ist für den Benutzer in einfacher Weise unmittelbar erkennbar, ob eine Verriegelung vorliegt und in welcher verriegelten Position sich die Lanze befindet, insbesondere, ob sich die Lanze in der Arbeits- oder der Ruheposition befindet.
Eine besonders konstruktiv einfache Ausgestaltung einer Verriegelung mit Verriegelungsanzeige ergibt sich durch federbeaufschlagte Bolzen, welche in entsprechende Aufnahmen der Lanze und/oder der Verschiebeeinheit einrasten, insbesondere, dass die Bolzen jeweils gegenüber einer Bolzenführung im eingerasteten Zustand überstehen und farblich markiert sind, so dass der Benutzer anhand des jeweils überstehenden Bolzen und dessen farbiger Markierung die jeweilige Verriegelungsposition erkennt.

In einem weiteren Beispiel umfasst die Wechselarmatur eine Entnahmevorrichtung für das Führungselement. Die Entnahmevorrichtung ist lösbar an dem Befestigungselement angeordnet und derart zusammenwirkend mit dem Führungselement ausgebildet, dass das Führungselement mittels der Entnahmevorrichtung zum Entfernen aus dem Befestigungselement verschiebbar, vorzugsweise linear verschiebbar ist. Auch hierbei ist es vorteilhaft, dass die Entnahmevorrichtung eine Verschiebemechanik, insbesondere bevorzugt eine selbsthemmende Verschiebemechanik aufweist.
Die Entnahmevorrichtung dient somit dazu, kontrolliert die relative Verschiebung zwischen Führungselement und Befestigungselement durchzuführen. Dies ist insbesondere notwendig, wenn wie zuvor beschrieben das Fluid in dem Behältnis einen hohen Überdruck gegenüber der Umgebung aufweist. Darüber hinaus ist wie vorbeschrieben, der Wartungshub erheblich größer als der Bewegungshub. Da die Wechselarmatur zumindest in einer Dimension eine Erstreckung aufweisen muss, welche zumindest dem Wartungshub entspricht, ist es besonders vorteilhaft, dass die Wechselarmatur lösbar an dem Befestigungselement angeordnet ist.
Hierdurch kann die Wechselarmatur lediglich in den seltenen Fällen, in denen eine Wartung durch Herausschieben oder Entnahme des Führungselementes notwendig ist, an dem Befestigungselement angeordnet werden. In den übrigen Zeiten kann die Entnahmevorrichtung entfernt werden, um eine höhere Kompaktheit der Wechselarmatur an dem Behältnis zu gewährleisten.
Eine konstruktiv einfache vorteilhafte Ausgestaltung der Entnahmevorrichtung ergibt sich in der Ausbildung umfassend eine insbesondere selbsthemmende Spindel und eine Betätigungsvorrichtung zum Drehen der Spindel, welche über entsprechende Abstützvorrichtungen an dem Befestigungselement angeordnet ist, wobei ein an der Spindel angeordnetes Gegenelement mit dem Führungselement lösbar verbindbar ist. Durch Drehen der Spindel wird somit in einfacher Weise das Führungselement relativ zu dem Befestigungselement verschoben. Insbesondere kann in einfacher Weise eine Kurbel an der Spindel zur manuellen Betätigung vorgesehen sein.
Es liegt im Rahmen der Erfindung, dass das Befestigungselement unmittelbar an eine Wand des Behältnisses angeordnet wird, vorzugsweise stoffschlüssig, insbesondere mittels Kleben oder Schweißen.

In einem weiteren Beispiel, das nicht unter den Schutzumfang der Ansprüche fällt, umfasst die Wechselarmatur zusätzlich ein Anschlusselement zum Anbringen einerseits an das Behältnis und andererseits zum lösbaren Verbinden mit dem Befestigungselement. Hierdurch wird eine größere Variabilität erzielt, da das Anschlusselement an die Bedingungen zum vorzugsweise stoffschlüssigen Anschließen an eine Wand des Behältnisses ausgebildet und optimiert sein kann und andererseits das Befestigungselement von dem Anschlusselement lösbar und somit ebenso austauschbar ist und hinsichtlich der relativen Verschiebung zwischen Führungselement und Befestigungselement optimiert sein kann.
Insbesondere ist es hierbei vorteilhaft, dass das Anschlusselement ein Verriegelungselement umfasst, welches Verriegelungselement zum wahlweisen fluiddichten Abriegeln zwischen Behältnis und Befestigungselement ausgebildet ist.
Hierdurch kann in einfacher Weise nach Verschieben des Führungselementes in die Wartungsstellung, ohne jedoch das Führungselement zunächst vollständig zu lösen, mittels des Verriegelungselementes der Behälter gegenüber dem Befestigungselement fluiddicht abgeschlossen werden und anschließend das Befestigungselement mit Führungselement von dem Anschlusselement gelöst werden.
Wie vorgehend beschrieben, ermöglicht die erfindungsgemäße Wechselarmatur kompakte Abmessungen in Benutzungsstellung, das heißt einen geringen Überstand in Verschieberichtung über die Behältniswand. Dies ist insbesondere darin begründet, dass in Benutzungsstellung das Führungselement mit wesentlichen Längenanteilen in das Behältnis hineinragt und dass keine zwingend dauerhaft vorhandene Entnahmevorrichtung zum Verschieben des Führungselementes relativ zu dem Befestigungselement notwendig ist, da gegebenenfalls eine lösbare Entnahmevorrichtung wie vorhergehend beschrieben vorgesehen werden kann. In einem Beispiel beträgt in Benutzungsstellung der Überstand der Wechselarmatur zu dem Behältnis weniger als 70 cm, weiter bevorzugt weniger als 60 cm, insbesondere bevorzugt weniger als 50 cm. Beispielsweise ist das Führungselement ausgebildet zum Zuleiten und Ableiten von Fluiden zu dem Arbeitsbereich der Lanze, wenn sich die Lanze in Ruheposition befindet. Hierdurch ist es möglich, Fluide beispielsweise zur Spülung, zur Wartung oder zur Kalibrierung den Arbeitsbereich der Lanze zuzuführen, ohne dass die Lanze vollständig aus dem Behältnis entfernt werden muss.

Hierzu weist das Führungselement beispielsweise eine Zuleitung und eine Ableitung auf, welche in Benutzungsstellung jeweils eine Anschlussöffnung außerhalb des Behältnisses und mindestens eine Mündung im Bereich des Arbeitsbereiches der Lanze fluidleitend verbinden.
Der zuvor beschriebene Arbeitshub zwischen Arbeitsposition und Ruheposition des Arbeitsbereiches der Lanze liegt beispielsweise im Bereich von 15 mm bis 40 mm, weiter bevorzugt im Bereich von 20 mm bis 30 mm.
Die erfindungsgemäße Wechselarmatur ist insbesondere für Anwendungen geeignet, bei dem in Benutzungsstellung und in Arbeitsposition ein großer Abstand zwischen Behältniswand und Arbeitsbereich der Lanze gewünscht ist. Beispielsweise ragt in Benutzungsstellung und mit Lanze in Arbeitsposition die Lanze im Bereich von 10 cm bis 70 cm, vorzugsweise im Bereich von 30 cm bis 60 cm in das Behältnis hinein.
Die Lanze ist zur Aufnahme einer Sonde ausgebildet. Hierzu weist die Lanze vorzugsweise einen hohlen inneren Bereich auf, insbesondere ist in konstruktiv einfacher Ausgestaltung eine zylindrische Ausnehmung zur Aufnahme der Sonde in der Lanze ausgebildet.
Dies ist vorteilhaft, da in Ruheposition die Lanze in den Behälter einragenden endständigen Bereich gegenüber der Lanzenführung abgedichtet ist, so dass die Sonde aus der Lanze entnommen werden kann, ohne dass eine Druckbeaufschlagung durch das Fluid in dem Behältnis auf die Sonde erfolgt.
Die Lanze kann hierbei zur Aufnahme einer Messsonde mit einem Messersensor zur Messdatenermittlung ausgebildet sein und weist hierzu vorzugsweise im endständigen, in das Behältnis in Arbeitsposition hineinragenden Bereich einen Messkorb auf, wie an sich bekannt und beispielsweise in DE 202007006784 U1 beschrieben.
Die Erfindung ist weiterhin in der Erkenntnis der Erfinder begründet, dass Wechselarmaturen im Allgemeinen und insbesondere die erfindungsgemäße Wechselarmatur sich zur Verwendung mit einer Fluidsonde zum Einbringen und/oder Entnehmen von Fluiden in das oder aus dem Behältnis eignen.
Wesentlich ist, dass die Lanze daher zur Aufnahme einer Fluidsonde zum Einbringen und/oder Entnehmen von Fluiden in das bzw. aus dem Behältnis ausgebildet ist.
Ebenso liegt es im Rahmen der Erfindung, dass die Lanze selbst als Sonde ausgebildet ist, nämlich als Fluidsonde zum Einbringen und/oder Entnehmen von Fluiden in das Behältnis.
Kennzeichnend für die erfindungsgemäße Wechselarmatur ist, dass die Fluidsonde mindestens zwei Fluidzuleitungen und eine Reaktorkammer aufweist, welche Reaktorkammer im in Benutzungsstellung in den Behälter hineinragenden endständigen Bereich der Fluidsonde angeordnet ist und welche Flüssigkeitszuleitungen voneinander fluiddicht getrennt ausgehend von einem Bereich außerhalb des Behältnisses bis zu dem Reaktorraum führen, so dass durch die Fluidleitungen geleitete Fluide erst im Reaktorraum miteinander in Kontakt treten.

In dieser Form der Lanze als Fluidsonde oder zur Aufnahme einer solchen Fluidsonde ist somit die Verwendung der erfindungsgemäßen Wechselarmatur für sensible Prozesse möglich, bei denen mindestens zwei unterschiedliche Prozessflüssigkeiten einer Reaktorkammer zugeführt werden, welche Reaktorkammer sich im Bereich oder unmittelbar im Fluid des Behältnisses befinden soll. Die Durchführung solcher Prozesse mittels Zuführung von mindestens zwei verschiedenen Fluiden zu einer in dem Behältnis angeordneten Reaktorkammer ist an sich bekannt und beispielsweise in WO 2009/077309 A1 und WO 2010/069632 A1 beschrieben. Mit der erfindungsgemäßen Wechselarmatur ist es nun erstmals möglich, solche Prozesse mit den vorgenannten Vorteilen der erfindungsgemäßen Wechselarmatur zu kombinieren, insbesondere eine einfache Handhabung und Wartung zu ermöglichen und insbesondere ein nachträgliches Anordnen der Wechselarmatur an die Wand eines Behältnisses ohne Prozessunterbrechung durchzuführen.

In ihrer Weiterbildung mit Fluidsonde gestattet es die Wechselarmatur demnach, mindestens zwei miteinander reaktive Fluide von außerhalb des Behältnisses durch die Fluidleitungen in die Reaktionskammer zu fördern und innerhalb der Reaktionskammer aus den Fluiden ein Produkt zu synthetisieren, welches wiederum durch eine Öffnung in das Behältnis austritt, und sich dort mit dem Medium vermischt. Der besondere Vorteil liegt darin begründet, dass die Reaktion der Fluide innerhalb des Behältnisses erfolgt. Dies ist gerade dann vorteilhaft, wenn das Reaktionsprodukt gefährliche Eigenschaften aufweist und deswegen unmittelbar am vorgesehenen Einsatzort - in situ - dargestellt werden soll.

Eine konkrete Anwendung dieser Ausführungsform besteht darin, in ihr aus Salzsäure und Natriumchlorit Chlordioxid zu synthetisieren, ein hochexplosives und giftiges Gas, welches sich hervorragend zur Desinfektion des Mediums Wasser eignet. Mithilfe der Wechselarmatur ist es möglich, eine bestehende Wasserleitung oder Wasserbehältnis mit einer Chlordioxid-basierten Desinfektionseinrichtung nachzurüsten. Der besondere Vorteil dieser Anlage ist darin zu sehen, dass das Chlordioxid erst im Behältnis entsteht und im Havariefall von dem umgebenden Wasser sofort unschädlich verdünnt wird.
Um einen Austritt des synthetisierten Produkts aus dem Reaktor in das vom Behältnis umfasste Medium zu ermöglichen, weist die vorgenannte Fluidsonde vorzugsweise eine Reaktorkammer mit mindestens einer Öffnung zum Austritt der in der Reaktorkammer erzeugten Produkte aus der Reaktorkammer in das Behältnis auf.
Insbesondere ist es hierbei vorteilhaft, dass in Arbeitsposition die vorgenannten Öffnungen der Reaktorkammer in das Behältnis hineinragen, die Reaktorkammer jedoch im Wesentlichen innerhalb des Führungselementes angeordnet ist. Hierdurch wird insbesondere der notwendige Arbeitshub verringert, unabhängig von der Erstreckung der Reaktorkammer in Verschieberichtung.
Wie zuvor beschrieben, ist es mit der erfindungsgemäßen Wechselarmatur erstmals möglich, an eine Behältniswand eines Behältnisses, welche keinerlei Anschlüsse aufweist, die erfindungsgemäße Wechselarmatur anzubringen, ohne das Behältnis zu leeren und/oder druckfrei zu stellen und insbesondere ohne einen laufenden Prozess zu unterbrechen. Dies ist durch das folgende Verfahren durchführbar:

Das Verfahren zum Anbringen einer Wechselarmatur, das nicht unter den Schutzumfang der Ansprüche fällt, vorzugsweise einer erfindungsgemäßen Wechselarmatur bzw. einer vorzugsweisen Ausführungsform davon an ein Behältnis umfasst folgende Verfahrensschritte:
In einem Verfahrensschritt A erfolgt ein fluiddichtes Anbringen eines Anschlusselementes an eine Wand des Behältnisses, welches Anschlusselement ein Verriegelungselement umfasst.

Hierbei liegt es im Rahmen des beispielhaften Verfahrens, dass zunächst das Anschlusselement an die Wand angebracht wird und anschließend das Verriegelungselement mit dem Anschlusselement verbunden wird, vorzugsweise lösbar verbunden wird. Das Anbringen des Anschlusselementes kann in an sich bekannter Weise, insbesondere mittels Schweißen oder Kleben erfolgen. Das Anschlusselement kann als Flansch ausgeführt sein.

In einem Verfahrensschritt B erfolgt ein Öffnen der Wand des Behältnisses in dem durch das Anschlusselement bedeckten und/oder umfassten Bereich.

Hier kann auf vorbekannte Verfahren zurückgegriffen werden, bei welchen eine Bohrung mit fluiddichter Abdichtung des Bohrers und einer verwendeten Bohreinheit zu dem Anschlusselement erfolgt.

In einem Verfahrensschritt C erfolgt das Verschließen der erzeugten Öffnung durch Verriegeln des Verriegelungselementes. Hier wird somit zunächst der Bohrer bis hinter das Verriegelungselement zurückgezogen, ohne die fluide Abdichtung der Bohreinheit gegenüber dem Anschlusselement zu lösen. Anschließend wird das Verriegelungselement geschlossen, so dass die verwendete Bohreinheit entfernt werden kann. Als Verriegelungselement eignet sich ein Kugelhahn.

In einem Verfahrensschritt D erfolgt ein fluiddichtes Anbringen des Befestigungselementes an dem Verriegelungselement.

In einem Verfahrensschritt E erfolgt ein Öffnen des Verriegelungselementes und ein Einschieben des Führungselementes in die Benutzungsstellung.

Mit diesem Verfahren kann somit erstmals eine Wechselarmatur ohne Prozessunterbrechung an ein Behältnis, insbesondere an ein Rohrelement angebracht werden.

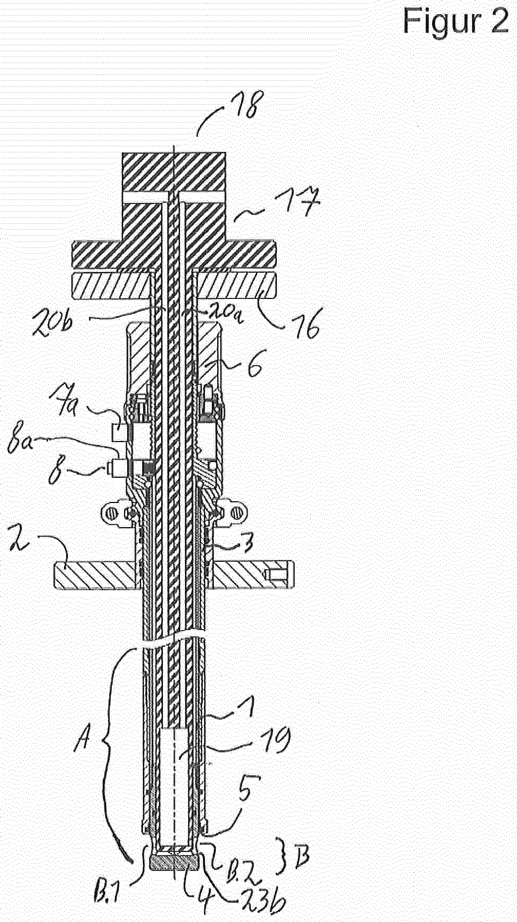

Weitere vorteilhafte und vorzugsweise Ausführungsformen der Erfindung werden im Folgenden anhand von Ausführungsbeispielen und den Figuren erläutert. Dabei zeigt:
- Figur 1: ein erstes Ausführungsbeispiel einer erfindungsgemäßen Wechselarmatur in Benutzungsstellung und in Ruheposition mit einer in einer Lanze der Wechselarmatur angeordneten Fluidsonde in schematischer Axialschnittdarstellung;
- Figur 2: das Ausführungsbeispiel gemäß Figur 1 in Benutzungsstellung und in Arbeitsposition in schematischer Axialschnittdarstellung;
- Figur 3: die Wechselarmatur gemäß Figur 1 ohne Sonde, wobei die Armatur zusätzlich ein Anschlusselement mit Verriegelungselement und eine Entnahmevorrichtung umfasst in schematischer Teilaxialschnittdarstellung, wobei die Wartungsstellung dargestellt ist;
- Figur 4: die Darstellung gemäß Figur 3 in Benutzungsstellung;
- Figur 5: die Darstellung gemäß Figur 4 nach Entfernen der Entnahmevorrichtung und
- Figur 6: ein Beispiel, das nicht unter den Schutzumfang der Ansprüche fällt, einer Wechselarmatur, in welcher eine Messonde in einer Lanze der Wechselarmatur angeordnet ist und welche Lanze Spülleitungen zum Spülen des Arbeitsbereiches der Messsonde aufweist.
Gleiche Bezugszeichen in den Figuren bezeichnen gleiche oder gleichwirkende Elemente.

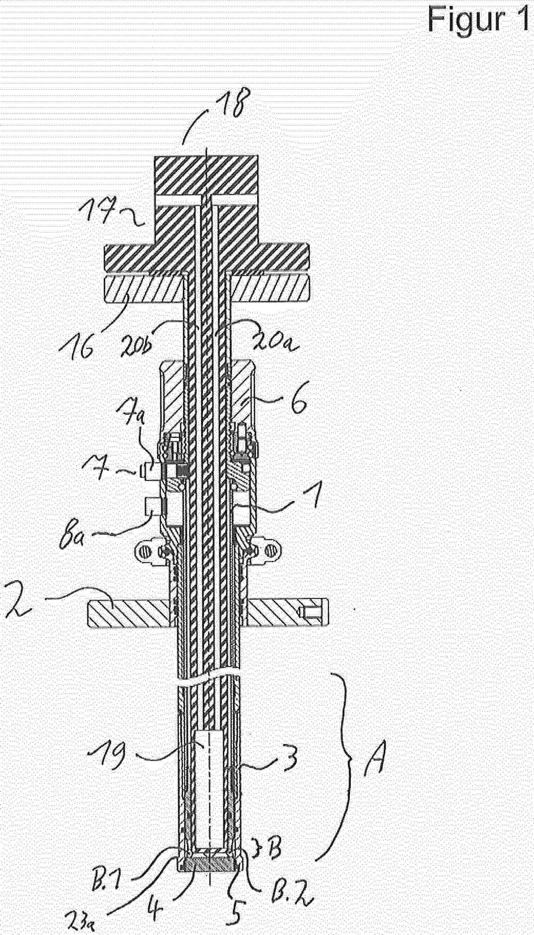

Die Figuren 1 bis 5 zeigen ein erstes Ausführungsbeispiel einer erfindungsgemäßen Wechselarmatur, welche eine Lanze 1 und ein Befestigungselement 2 mit einem Führungselement 3 für die Lanze 1 umfasst.
Die Figuren 1, 2, 4 und 5 zeigen jeweils eine Benutzungsstellung der Wechselarmatur, bei welcher Benutzungsstellung das Führungselement 3 zumindest in dem Eintauchbereich A in das Behältnis bzw. das darin befindliche Medium hineinragt.
Das Führungselement 3 ist zur Aufnahme der Lanze 1 ausgebildet, wobei das Führungselement 3 hierzu eine im Wesentlichen zylindrische Ausnehmung aufweist. Die Lanze 3 ist in dem Führungselement und relativ zu diesen linear verschiebbar, in der Darstellung der Figuren vertikal nach oben und unten.
Hierbei ist das Führungselement relativ zur Lanze zwischen einer Arbeitsposition, welche in Figur 2 dargestellt ist und einer Ruheposition, welche in den Figuren 1, 3 und 5 dargestellt ist, verschiebbar.
Die Lanze 1 weist einen Arbeitsbereich B auf. Dieser Arbeitsbereich steht in der Arbeitsposition in dem Behältnis über das Führungselement 3 hervor, so dass insbesondere Fluid in dem Behältnis über eine Vielzahl von Arbeitsbereichöffnungen B.1 und B.2 in das Innere der Lanze 1 eintreten oder Fluid aus dem inneren der Lanze 1 austreten kann.

In der Ruheposition ist der Arbeitsbereich B hingegen in das Führungselement 3 eingezogen. Eine im endständigen Bereich der Lanze 1 angebrachte Dichtfläche 4 liegt hierbei fluiddicht an einer endständig an der Innenwand des Führungselementes 3 angeordneten Dichtung 5 an.

Wie beispielsweise in Figur 1 ersichtlich, ist in der Ruheposition somit insbesondere der Arbeitsbereich B der Lanze 1 durch die Dichtfläche 4, die Dichtung 5 sowie die Mantelflächen des Führungselementes 3 fluiddicht gegenüber dem Behältnis abgedichtet.

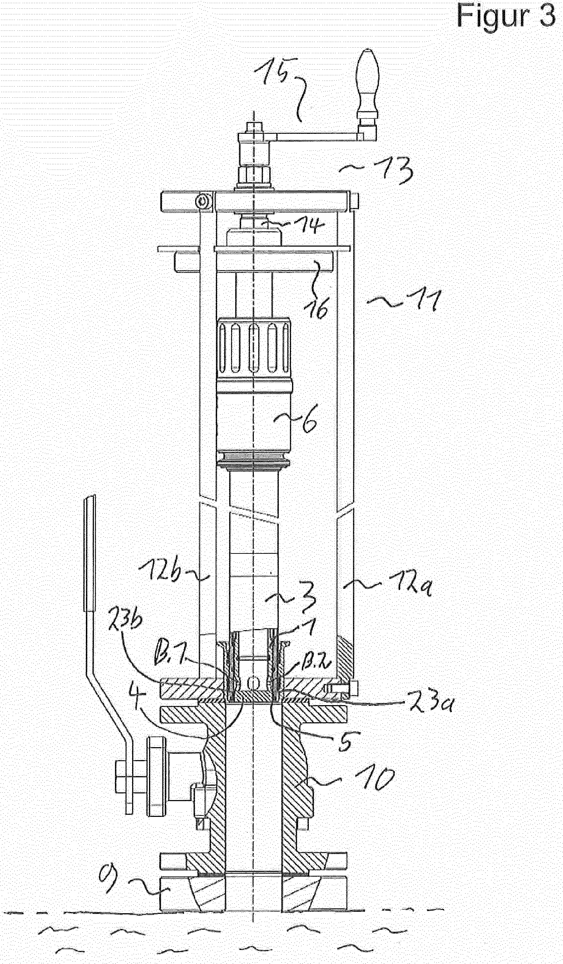

Wesentlich ist, dass das Führungselement 3 verschiebbar an dem Befestigungselement 2 angeordnet ist. Das Befestigungselement 2 ist in der Darstellung gemäß der Figuren 1 bis 5 relativ zu dem Befestigungselement 2 vertikal nach oben und unten verschiebbar ausgebildet, derart, dass das Führungselement wahlweise in der Benutzungsstellung (gemäß Figuren 1, 2, 4 und 5) anordbar oder aus dem Behältnis entfernbar ist, wie in Figur 3 dargestellt.

In Figur 3 ist eine Wartungsstellung dargestellt, bei welcher das Führungselement 3 derart linear relativ zu dem Befestigungselement 2 verschoben wurde, dass die vorgenannten endständigen Bereiche sowohl des Führungselementes 3, als auch der Lanze 1 in etwa mit der Unterseite gemäß der Darstellung in Figur 3 des Befestigungselementes 2 fluchten und somit insbesondere Führungselemente 3 und Lanze 1 in Wartungsstellung nicht in das Behältnis hineinragen. Erforderlichenfalls ist der Kugelhahn 10 in Wartungsstellung zu schließen, um jeglichen Kontakt und/oder Druckübertragung zwischen Medium und Wechselarmatur zu unterbinden.

Um zu verhindern, dass die Lanze nach oben aus dem Führungselement oder das Führungselement nach oben aus dem Befestigungselement herausrutscht, sind Anschläge 23a, 23b vorgesehen.

Hierdurch ergeben sich die zuvor genannten Vorteile, dass einerseits eine Wartung nicht nur der Lanze 1, sondern auch des Führungselementes 3 möglich ist, insbesondere ohne Prozessunterbrechung, das heißt ohne dass eine Entleerung oder ein Druckausgleich gegenüber der Umgebung in dem Behältnis notwendig wäre.

Darüber hinaus ist hierdurch ein Anordnen der Wechselarmatur an dem Behältnis ohne Prozessunterbrechung möglich, wie weiter unten ausführlich beschrieben.

Die Wechselarmatur weist eine mechanische Verschiebeeinheit 6 auf, welche mit der Lanze 1 und dem Führungselement 3 derart zusammenwirkend ausgestaltet ist, dass die Lanze 1 relativ zu dem Führungselement 3 mittels mechanischer Betätigung der Verschiebeeinheit 6 nach oben und unten verschiebbar ist.

Die Verschiebeeinheit 6 weist hierzu ein drehbares Element mit einem Innengewinde auf, welches Innengewinde in ein Außengewinde der Lanze 1 eingreift. Durch manuelles Drehen des drehbaren Elementes ist somit in einfacher Weise ein vertikales Verschieben der Lanze 1 relativ zu dem Führungselement 3 möglich und somit insbesondere ein Anordnen der Lanze 1 wahlweise in Arbeitsposition oder in Ruheposition. Darüber hinaus wirkt die Verbindung zwischen Lanze 1 und Führungselement 3 aufgrund der hohen Reibung der miteinander in Eingriff stehenden Gewindegänge selbsthemmend.

Die mechanische Verschiebeeinheit 6 weist federbeaufschlagte Bolzen 7 und 8 auf, welche in entsprechende Ausnehmungen in dem drehbaren Element der mechanischen Verschiebeeinheit 6 in Eingriff gebracht werden können. Befindet sich die Lanze 1 beispielsweise in Ruheposition, wie in Figur 1 dargestellt, so steht Bolzen 7 in Eingriff mit einer entsprechenden Ausnehmung und tritt aus einer den Bolzen 7 umgebenden Hülse 7a hervor. Der Endbereich des Bolzens 7 ist farblich gekennzeichnet, beispielsweise rot, so dass der Benutzer in einfacher Weise erkennt, dass die Lanze in Ruheposition verriegelt ist. Um die Lanze in Arbeitsposition zu bringen, muss der Benutzer zunächst manuell durch Eindrücken des Bolzens 7 die Verriegelung lösen und das drehbare Element der mechanischen Verschiebeeinheit drehen, bis sich die Lanze 1 in Arbeitsposition befindet. In dieser Position tritt Bolzen 8 in eine entsprechende Ausnehmung in dem drehbaren Element ein und steht in gleicher Weise über eine Hülse 8a hervor. Der Bolzen 8 ist im endständigen Bereich gegenüber dem Bolzen 7 andersfarbig gekennzeichnet, beispielsweise grün, so dass der Benutzer in einfacher Weise erkennt, dass sich die Lanze 1 in Arbeitsposition befindet.

Wie zuvor beschrieben, bietet die erfindungsgemäße Wechselarmatur erstmalig die Möglichkeit, in einfacher Weise einer Wartung insbesondere an dem Führungselement 3 und der Lanze 1 durchzuführen und es ist erstmals möglich, die Wechselarmatur an einem Behältnis ohne Prozessunterbrechung anzuordnen, wenn die Behältniswand an der gewünschten Position für die Wechselarmatur noch keinerlei Anschlussmöglichkeit aufweist. Dies wird im Folgenden anhand des ersten Ausführungsbeispiels der erfindungsgemäßen Wechselarmatur und den Figuren 3 bis 5 beschrieben.

Das erste Ausführungsbeispiel der erfindungsgemäßen Wechselarmatur umfasst zusätzlich ein Anschlusselement, welches einen Rohrflansch 9 und ein Verriegelungselement aufweist, welches Verriegelungselement als Kugelhahn 10 ausgebildet ist.

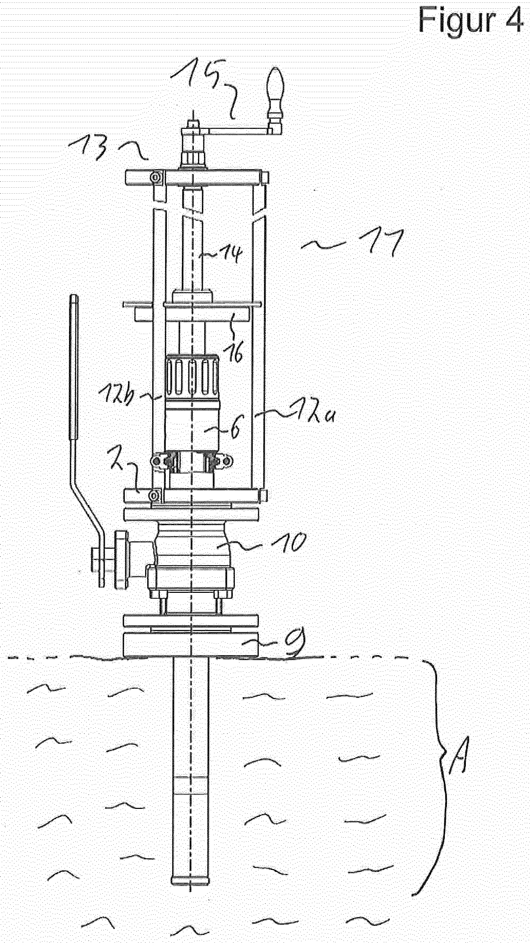

Darüber hinaus umfasst die Wechselarmatur eine Entnahmevorrichtung 11, welche in den Figuren 3 und 4 dargestellt ist.

Zur besseren Darstellbarkeit sind die Entnahmevorrichtung 11 sowie das Anschlusselement, umfassend den Rohrflansch 9 und Kugelhahn 10 in den Figuren 1 und 2 nicht dargestellt.

Um die Wechselarmatur an einem Behältnis anzubringen, wird ein Anschlussverfahren umfassend folgende Verfahrensschritte durchgeführt:

In diesem Ausführungsbeispiel ist das Behältnis ein Rohr eines Rohrleitungssystems, welches Teil einer komplexen industriellen Prozessierungsanlage ist.

An einer Wand des Behältnisses wird in einem Verfahrensschritt A der Rohrflansch 9 angeschweißt und der Kugelhahn 10 fluiddicht lösbar mit dem Rohrflansch verbunden, wobei die Verbindung in an sich bekannter Weise z.B. durch Verschraubung erfolgt.

In einem Verfahrensschritt B erfolgt mittels Bohren ein Öffnen der Behältniswand in dem von dem Rohrflansch 9 umfassten Bereich, wobei hierbei ein Bohrer durch den Kugelhahn 10 und die von dem Rohrflansch 9 umfasste Öffnung hindurchgeführt wird und ein Bohrantrieb fluiddicht mit dem Kugelhahn verbunden z.B. verschraubt ist, so dass während des Bohrvorgangs kein Fluid aus dem Behältnis in die Umgebung austritt. Nach Durchbohren der Rohrwand wird der Bohrer zurückgezogen, der Kugelhahn geschlossen und anschließend der Bohrantrieb von dem Kugelhahn gelöst.

Dies entspricht somit einem Verfahrensschritt C, bei dem die erzeugte Öffnung durch Verriegeln mittels des Kugelhahns verriegelt wird.

In einem Verfahrensschritt D erfolgt ein fluiddichtes Anbringen des Befestigungsmittels 2 an dem Kugelhahn 10 in an sich bekannter Weise.

In einem Verfahrensschritt E erfolgt ein Öffnen des Kugelhahns 10 und ein Einschieben des Führungselementes 3 durch den Kugelhahn 10 und den Rohrflansch 9 in das Behältnis, um das Führungselement 3 in Benutzungsstellung zu bringen.

Der Wechsel zwischen Wartungsstellung und Benutzungsstellung ist insbesondere mit vorgenannter Entnahmevorrichtung 11 in einfacher Weise durchführbar:

Figur 3 zeigt eine Anordnung in Wartungsstellung, wobei die Entnahmevorrichtung lösbar an dem Befestigungselement 2 angeordnet ist.

Die Entnahmevorrichtung 11 weist mehrere Stützstreben 12a, 12b auf, welche einerseits mittels Schrauben lösbar mit dem Befestigungselement 2 verbunden sind und andererseits mittels Schrauben an einer Verschiebevorrichtung 13 angeordnet sind. Die Verschiebevorrichtung 13 umfasst eine Spindel 14, welche mittels einer Kurbel 15 manuell drehbar ist. Die Spindel 14 ist mit einer Sondenkopfaufnahme 16 der Lanze 1 lösbar verbunden. Ausgehend von der in Figur 3 dargestellten Wartungsstellung kann somit durch Drehen an der Kurbel 15 mittels der Entnahmevorrichtung 11 das Führungselement 3 durch den Kugelhahn 10 und den Rohrflansch 9 hindurch in das Behältnis eingeführt werden, so dass sich das Führungselement 3 in Benutzungsstellung befindet, wie in Figur 4 dargestellt.

Anschließend kann durch Lösen der Entnahmevorrichtung 11 von dem Befestigungselement 2 und der Sondenkopfaufnahme 16 die Entnahmevorrichtung 11 entfernt werden und behindert somit den Benutzer nicht beim weiteren Verwenden der Wechselarmatur.

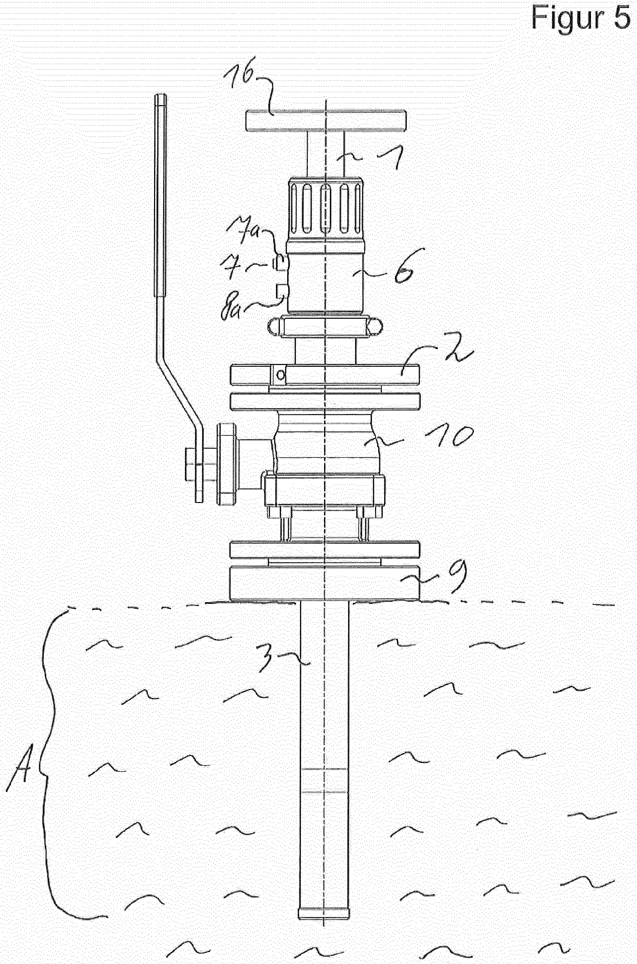

Die Situation mit entfernter Entnahmevorrichtung 11 ist in Figur 5 dargestellt.

Zur Entnahme des Führungselementes 3, der Lanze 1 und des Befestigungselementes 2 kann in umgekehrter Reihenfolge, das heißt in Abfolge Figur 5, Figur 4, Figur 3 zunächst die Entnahmevorrichtung 11 an dem Befestigungselement 2 und der Sondenkopfaufnahme 16 angeordnet werden und anschließend mittels Drehen der Kurbel das Führungselement 3 in Wartungsstellung gemäß Figur 3 gebracht werden. Anschließend kann beispielsweise der Kugelhahn 10 geschlossen und die Lanze 1, das Befestigungselement 2 und das Führungselement 3 zu Wartungs- oder Austauschzwecken entfernt werden.

Wie zuvor erwähnt, ist die Lanze 1 des ersten Ausführungsbeispiels einer erfindungsgemäßen Wechselarmatur zur Aufnahme einer Sonde ausgebildet. In den Figuren 1 und 2 ist die Wechselarmatur dargestellt, bei welcher in eine im Wesentlichen zylindrische Aufnahme für eine Sonde der Lanze 1 eine Fluidsonde 17 eingeführt ist. Die Fluidsonde 17 umfasst einen Sondenkopf 18, welcher mit der Sondenkopfaufnahme 16 der Lanze 1 lösbar verbunden ist. Wesentlich ist, dass die Fluidsonde 17 einen Reaktorraum 19 aufweist, welcher im endständigen, in Benutzungsstellung in das Behältnis hineinreichenden Bereich angeordnet ist. Weiterhin weist die Fluidsonde 17 eine erste Fluidleitung 20a und eine zweite Fluidleitung 20b auf, welche Fluidleitungen beide, voneinander beabstandet, in den Reaktorraum 19 münden. Weiterhin weist der Reaktorraum 19 im endständigen Bereich Öffnungen auf, welche mit den Öffnungen B.1 und B.2 des Arbeitsbereiches der Lanze 1 kommunizieren.

In Arbeitsposition gemäß Figur 2 tritt somit Fluid aus dem Behältnis beispielsweise über Öffnung B.1 in die Reaktorkammer 19 ein. Weiterhin werden zwei unterschiedliche reaktive Flüssigkeiten und/oder Gase über die erste Fluidleitung 20a und die zweite Fluidleitung 20b in die Reaktorkammer geleitet, wobei die beiden Fluide erstmals in der Reaktorkammer miteinander in Kontakt treten und chemisch zu mindestens einem Reaktionsprodukt reagieren. Die Produkte der im Reaktorraum stattfindenden Reaktion treten aus dem Behältnis beispielsweise an der Öffnung B.2 in das Behältnis ein und vermischen sich dort mit dem Medium

Grundsätzlich ist es auch möglich, dass die der Reaktorkammer zugeführten reaktiven Fluide nicht nur untereinander, sondern auch zusammen mit dem Medium aus dem Behälter chemisch reagieren. In diesem Falle tritt das Medium durch eine geeignete Öffnung in die Reaktionskammer ein und reagiert dort mit den von außen zugeführten Fluiden. Die Reaktionsprodukte treten dann durch die Öffnung in das Behältnis ein.

Wie insbesondere in Figur 2 ersichtlich, erstreckt sich der Reaktorraum 19 vertikal über eine Strecke, welche einem Vielfachen des Arbeitsbereiches B und somit auch das Arbeitshubes entspricht. Sofern gefährliche Stoffe in der Reaktorkammer 19 gebildet werden, kann es vorteilhaft sein, dass die Reaktorkammer und der Arbeitshub so bemessen sind, dass sich die Reaktorkammer zumindest in Arbeitsstellung vollständig in einem vom Medium umgebenen Bereich erstreckt.

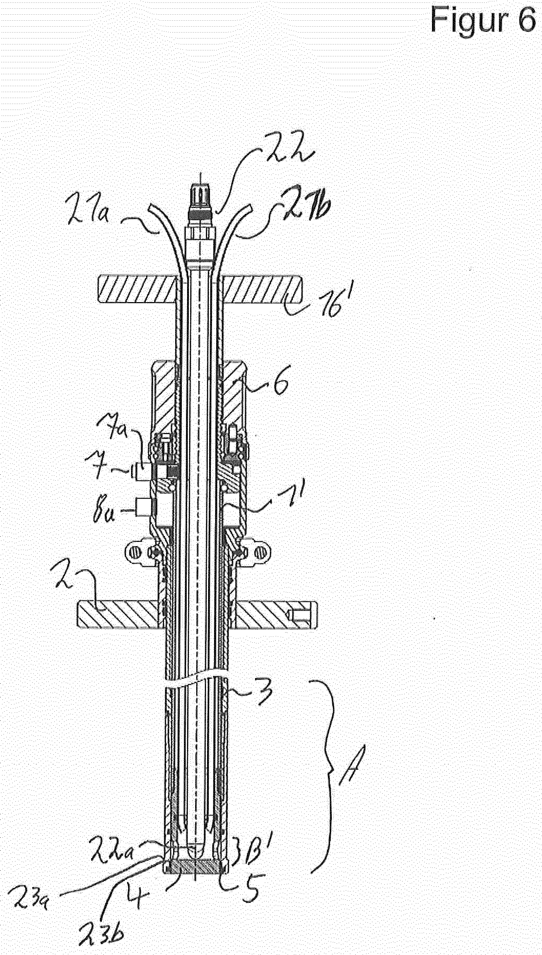

In Figur 6 ist ein zweites Ausführungsbeispiel einer erfindungsgemäßen Wechselarmatur in schematischer Darstellung als Axialschnitt dargestellt. Der Aufbau entspricht grundsätzlich den des ersten Ausführungsbeispiels insbesondere gemäß Figur 1 und Figur 2. Gleiche Bezugszeichen bezeichnen hierbei gleiche oder gleichwirkende Elemente. Im Folgenden wird daher nur auf die Unterschiede zwischen erstem und zweiten Ausführungsbeispiel eingegangen:

Die Lanze 1' des zweiten Ausführungsbeispiels einer erfindungsgemäßen Wechselarmatur weist eine erste Spülleitung 21a und eine zweite Spülleitung 21b auf. Diese Führen von einem Bereich der Sondenkopfaufnahme 16 der Lanze 1' zu einem Arbeitsbereich B' der Lanze 1'. In Ruheposition, wie in Figur 6 dargestellt, ist somit beispielsweise über die Spülleitung 21a dem Arbeitsbereich der Lanze 1' Fluid zuführbar und dieses über die Spülleitung 21b wieder abführbar, so dass ein Spülen des Arbeitsbereiches ohne Entnahme der Lanze 1' möglich ist.
Anders als die Fluidleitungen 20a, 20b der Reaktorkammer 19 werden die Spülleitungen 21a, 21b in Ruheposition der Lanze aktiviert. Das durch die Spülleitung zum Arbeitsbereich transportierte Spülmittel kommt daher nicht mit dem im Behältnis befindlichen Medium in Kontakt. Spülleitungen sind insbesondere dann vorzusehen, wenn es sich bei der Lanze um eine Messsonde handelt. Sofern es sich bei der Lanze um eine Fluidsonde handelt, kann eine Spülung der Sonde über die Fluidleitungen erfolgen.

In einem Beispiel, das nicht unter den Schutzumfang der Ansprüche fällt, gemäß Figur 6 ist die Lanze 1' ebenfalls durch Vorsehen einer im Wesentlichen zylindrischen Ausnehmung zur Aufnahme einer Sonde ausgebildet, wobei in der Darstellung gemäß Figur 6 eine Messsonde 22 in der Lanze 1' angeordnet ist. Die Messsonde 22 weist in einem endständigen Bereich einen Messsensor 22a auf.
In Arbeitsposition tritt Medium aus dem Behältnis durch Öffnungen im Arbeitsbereich B' in die Lanze 1' ein und umspült somit Messsensor 22a und tritt anschließend über weitere Öffnungen wieder aus dem Arbeitsbereich B' in das Behältnis aus.
In der in Figur 6 dargestellten Ruheposition ist hingegen ein Spülen des Messsensors 22a über die Spülleitungen 21a und 21b möglich. Darüber hinaus ist es möglich, über die Spülleitungen 21a und 21b Kalibrierflüssigkeit dem Messsensor 22a zuzuführen, um eine Kalibrierung vorzunehmen.
In Benutzungsstellung weist das Führungselement 3 des ersten und zweiten Ausführungsbeispiels der erfindungsgemäßen Wechselarmatur eine Eintauchtiefe von etwa 30 cm in das Behältnis auf. Der Arbeitsbereich der Lanze 1 und 1' des ersten und zweiten Ausführungsbeispiels der erfindungsgemäßen Wechselarmatur weist eine vertikale Erstreckung von etwa 3 cm auf, die Dichtplatte 4 eine Dicke von etwa 1 cm, so dass sich ein Arbeitshub von etwa 3-4 cm ergibt.

## Patentansprüche

1. Wechselarmatur für ein Behältnis,
umfassend eine Lanze (1, 1') und ein Befestigungselement (2) mit einem Führungselement (3) für die Lanze (1, 1'),
wobei in einer Benutzungsstellung bei zumindest mittelbar an dem Behältnis angeordneten Befestigungselement (2) das Führungselement (3) zumindest teilweise in das Behältnis hineinragt und
wobei das Führungselement (3) zur Aufnahme der Lanze (1, 1') ausgebildet ist, derart, dass die Lanze (1, 1') in dem Führungselement (3) und relativ zu diesem zwischen einer Arbeitsposition, bei welcher ein Arbeitsbereich (B, B') der Lanze (1, 1') mit dem Fluid in dem Behältnis in Kontakt steht und einer Ruheposition, bei welcher der Arbeitsbereich (B, B') innerhalb des Führungselementes (3) liegt und gegenüber dem Fluid in dem Behältnis abgedichtet ist, verschiebbar ist,
wobei das Führungselement (3) verschiebbar an dem Befestigungselement (2) angeordnet ist, derart, dass bei zumindest mittelbar an dem Behältnis angeordnetem Befestigungselement (2) das Führungselement (3) wahlweise in der Benutzungsstellung anordbar oder aus dem Behältnis entfernbar ist und
wobei die Lanze (1, 1') eine Fluidsonde (17) enthält oder als Fluidsonde (17) ausgebildet ist, wobei die Fluidsonde (17) zum Einbringen und/oder Entnehmen von Flüssigkeit in das/ aus dem Behältnis ausgebildet ist, die Fluidsonde (17) mindestens zwei Fluidzuleitungen (20a, 20b) und eine Reaktorkammer (19) aufweist, welche Reaktorkammer (19) im in Benutzungsstellung in das Behältnis hineinragenden endständigen Bereich der Fluidsonde (17) angeordnet ist und welche Fluidzuleitungen (20a, 20b) voneinander fluiddicht getrennt ausgehend von einem Bereich (B, B') außerhalb des Behältnisses bis zu der Reaktorkammer (19) führen, so dass durch die Fluidleitungen (20a, 20b) geleitete Fluide erst in der Reaktorkammer (19) in Kontakt treten.

2. Wechselarmatur nach Anspruch 1,
**dadurch gekennzeichnet,**
**dass** die Reaktorkammer (19) mindestens eine Öffnung zum Austritt von in der Reaktorkammer (19) erzeugten Produkten aus der Reaktorkammer (19) in das Behältnis aufweist.

3. Wechselarmatur nach Anspruch 2,
**dadurch gekennzeichnet,**
**dass** in Arbeitsposition die Öffnung der Reaktorkammer (19) in das Behältnis hineinragt und sich die Reaktorkammer (19) im Wesentlichen innerhalb des in das Behältnis hineinragenden Abschnitts der Fluidsonde (17) erstreckt.

4. Verwendung einer Wechselarmatur nach einem der Ansprüche 1 bis 3 zur Zuführung mindestens zweier verschiedener Fluiden in eine Reaktorkammer (19) einer Fluidsonde (17), **dadurch gekennzeichnet, dass** die Fluidsonde (17) die Lanze (1, 1') der Wechselarmatur ist oder in der Lanze (1, 1') der Wechselarmatur gelagert ist.

## Claims

1. Interchangeable fitting for a container, comprising a lance (1, 1') and a fastening element (2) with a guide element (3) for the lance (1, 1'), wherein, in a use position with the fastening element (2) arranged at least indirectly on the container, the guide element (3) projects at least partially into the container and wherein the guide element (3) is designed to receive the lance (1, 1') in such a way that the lance (1, 1') is displaceable in the guide element (3) and relative thereto between a working position in which a working region (B, B') of the lance (1, 1') is in contact with the fluid in the container, and a rest position in which the working region (B, B') is situated within the guide element (3) and is sealed with respect to the fluid in the container, wherein the guide element (3) is arranged so as to be displaceable on the fastening element (2) in such a way that, with the fastening element (2) arranged at least indirectly on the container, the guide element (3) can be selectively arranged in the use position or can be removed from the container and wherein the lance (1, 1') contains a fluid probe (17) or is designed as a fluid probe (17), wherein the fluid probe (17) is designed to introduce and/or remove liquid into/from the container, the fluid probe (17) has at least two fluid supply lines (20a, 20b) and a reactor chamber (19), which reactor chamber (19) is arranged in the end region of the fluid probe (17) that projects into the container in the use position and which fluid supply lines (20a, 20b), separated in a fluid-tight manner from one another, lead up to the reactor chamber (19) starting from a region (B, B') outside the container, with the result that fluids channelled through the fluid lines (20a, 20b) first come into contact in the reactor chamber (19).

2. Interchangeable fitting according to Claim 1, **characterized in that** the reactor chamber (19) has at least one opening for discharging products produced in the reactor chamber (19) out of the reactor chamber (19) and into the container.

3. Interchangeable fitting according to Claim 2, **characterized in that**, in the working position, the opening of the reactor chamber (19) projects into the container and the reactor chamber (19) extends substantially within the portion of the fluid probe (17) that projects into the container.

4. Use of an interchangeable fitting according to one of Claims 1 to 3 for feeding at least two different fluids into a reactor chamber (19) of a fluid probe (17), **characterized in that** the fluid probe (17) is the lance (1, 1') of the interchangeable fitting or is mounted in the lance (1, 1') of the interchangeable fitting.

## Revendications

1. Armature interchangeable pour un récipient, comprenant une lance (1, 1') et un élément de fixation (2) avec un élément de guidage (3) pour la lance (1, 1'), dans laquelle dans une position d'utilisation avec l'élément de fixation (2) disposé au moins indirectement sur le récipient l'élément de guidage (3) pénètre au moins partiellement dans le récipient et
dans laquelle l'élément de guidage (3) est configuré en vue de contenir la lance (1, 1'), de telle manière que la lance (1, 1') soit déplaçable dans l'élément de guidage (3) et par rapport à celui-ci entre une position de travail, dans laquelle une zone de travail (B, B') de la lance (1, 1') est en contact avec le fluide dans le récipient, et une position de repos, dans laquelle la zone de travail (B, B') est située à l'intérieur de l'élément de guidage (3) et est étanche par rapport au fluide dans le récipient,
dans laquelle l'élément de guidage (3) est disposé de façon déplaçable sur l'élément de fixation (2), de telle manière qu'avec l'élément de fixation (2) disposé au moins indirectement sur le récipient l'élément de guidage (3) puisse au choix être disposé dans la position d'utilisation ou retiré hors du récipient, et
dans laquelle la lance (1, 1') contient une sonde de fluide (17) ou est formée par une sonde de fluide (17), dans laquelle la sonde de fluide (17) est réalisée de façon à introduire et/ou retirer du fluide dans le/hors du récipient,
la sonde de fluide (17) présente au moins deux conduits d'arrivée de fluide (20a, 20b) et une chambre de réacteur (19), chambre de réacteur (19) qui est disposée dans la région d'extrémité de la sonde de fluide (17) pénétrant dans le récipient dans la position d'utilisation et conduits d'arrivée de fluide (20a, 20b) séparés l'un de l'autre de façon étanche au fluide qui conduisent d'une zone (B, B') à l'extérieur du récipient jusqu'à la chambre de réacteur (19), de telle manière que des fluides transportés par les conduits de fluide (20a, 20b) n'entrent en contact que dans la chambre de réacteur (19) .

2. Armature interchangeable selon la revendication 1, **caractérisée en ce que** la chambre de réacteur (19) présente au moins une ouverture pour la sortie de produits fabriqués dans la chambre de réacteur (19) de la chambre de réacteur (19) vers le récipient.

3. Armature interchangeable selon la revendication 2, **caractérisée en ce que** dans la position de travail l'ouverture de la chambre de réacteur (19) pénètre dans le récipient et la chambre de réacteur (19) s'étend essentiellement à l'intérieur de la partie de la sonde de fluide (17) pénétrant dans le récipient.

4. Utilisation d'une armature interchangeable selon l'une quelconque des revendications 1 à 3 pour l'amenée d'au moins deux fluides différents dans une chambre de réacteur (19) d'une sonde de fluide (17), **caractérisée en ce que** la sonde de fluide (17) est la lance (1, 1') de l'armature interchangeable ou est montée dans la lance (1, 1') de l'armature interchangeable.
